# EUROPEAN PATENT SPECIFICATION

(11) **EP 2 640 910 B1**
(45) Date of publication and mention of the grant of the patent: **26.07.2017**
(21) Application number: 11841060.4
(22) Date of filing: 21.11.2011
(51) Int. Cl.: E04F 19/04, C09C 3/10, C09C 3/00, E04F 13/02, D21H 27/18, D21H 17/07, D21H 17/67, D21H 19/38, D21H 19/46, D21H 21/28, D21H 21/34

(54) **DECORATIVE PRODUCTS AND BUILDING PRODUCTS WITH IMPROVED OPACITY**
SCHMUCKPRODUKTE UND BAUPRODUKTE MIT VERBESSERTER OPAZITÄT
PRODUITS DE DÉCORATION ET PRODUITS DE CONSTRUCTION À OPACITÉ AMÉLIORÉE

(30) Priority: 19.11.2010 AU 2010905133
(43) Date of publication of application: 25.09.2013
(73) Proprietor: Depco-Trh Pty Ltd, Williamstown, Victoria 3016 (AU)
(72) Inventor: PRICE, David Elwyn, Williamstown, Victoria 3016 (AU)
(74) Representative: Demski, Siegfried
(86) International application number: PCT/AU2011/001501
(87) International publication number: WO 2012/065230

(56) References cited:
- WO-A1-2006/111458
- JP-A- 6 306 313
- JP-A- H06 306 313
- US-A1- 2004 025 749
- US-A1- 2007 071 989
- US-B1- 6 709 764

## Description

### Field of the invention

The invention relates to decorative products and building products, especially but not exclusively to decorative and building product laminates used in the manufacture of furniture, flooring, wall and ceiling components, and to the manufacture of such laminates. Decorative laminates and building product laminates used in buildings and for furniture are made with a variety of materials including decor paper, kraft papers, balancing papers, overlay papers and non-woven materials.

### Background of the Invention

In the manufacture of decorative laminates and building product laminates paper or non-woven is used as a carrier of resin, colour, design or any combination of these. As well the fibrous nature of the paper or non-woven provides resistance against cracking and or improved impact resistance. In some cases the paper or non-woven is not required and the building product is only coated. Non-woven made with glass or basalt fibres will also improve fire resistance. The resin used to impregnate the paper or non-woven is usually clear to avoid interfering with the visual aspects such as desired colour or print.

In the manufacture of decorative laminates and building product laminates it is known to include pigments to provide a desired colour as well as opacity. Opacity is required to provide visual interference between the surface and any background material. A prime example is found in decorative laminates where the background material may be either a wood panel or one or several kraft papers. Paper or non-woven that does not have opacity would show the colour and structure of the background material thereby interfering with the intended visual appeal of the final product. In the case of white laminates the impregnating resin and coating resin may contain additional TiO₂ to further improve the visual result.

Materials used for opacity are well known and chosen for their performance, economic and environmental influence. It is well known that TiO₂ is the leading inorganic white opacifying agent, being supplied in either rutile or anatase form. The light refraction index (LRI) of TiO₂ is better than any known substitute, being in the order of 2.7 for rutile and 2.5 for anatase. For comparison the LRIs of alternative materials that are used to provide opacity are in the order of ZnS 2.37, ZnO 2, PCC 1.6, kaolin 1.56, talc 1.57.

Other methods are also known from prior art. A fine particle used for coating and printing, and decorative panels is previously known from the Japanese unexamined patent application No. H6-306313. The object of the invention is to obtain a constant brightish metallic colour tone on a coated or printed surface such as a decorative panel. Such a coating film contains 6 µm circular flakes of melamine cyanurate. The coating is formed by baking onto an aluminium foil an acrylic resin containing 5% by weight melamine cyanurate.

The international application WO 2006/111458 A1 discloses a fire retardant laminate with improved fire and impact resistance. The laminate comprises a first layer of resin-impregnated paper and at least one layer of fibre reinforced veil. There may be a second layer of resin-impregnated paper, wherein the fibre reinforced veil layer or layers are sandwiched between the layers of resin-impregnated paper. The fibre reinforced veil layer includes a secondary binder and a filler.

The United States Patent Application US 2007/00717989 A1 relates to a process for making a decorative base paper for a paper laminate comprising impregnating a base paper with a pigment mixture of titanium dioxide and water wherein the titanium dioxide pigment is made by treating a mixture of titanium dioxide pigment and water with a source ocf phosphorous and a source of aluminium; drying the treated mixture to form a treated pigment, the treated pigment having surface hydroxyl groups; and removing a major proportion of the surface hydroxyl groups of the treated pigment.

The United States Patent US 6,709,764 B1 discloses a decorative paper sheet and a decorative laminate comprising the same. The paper sheet is made impregnable by a thermosetting resin. It further discloses a decorative sheet impregnated with a thermosetting resin and the laminated decorative panels or moulded section which include it. Finally, the invention relates to a process for manufacturing the sheets as well as to the decorative sheets impregnated with a thermosetting resin.

Reference to any prior art in the specification is not, and should not be taken as, an acknowledgment or any form of suggestion that this prior art forms part of the common general knowledge in Australia or any other jurisdiction or that this prior art could reasonably be expected to be ascertained, understood and regarded as relevant by a person skilled in the art.

While any of those prior art documents relate to the invention at hand, the methods and products disclosed therein are still disadvantageous.

It is an object of the invention to provide one or more useful alternative approaches for providing opacity in decorative products and building products, especially decorative and building product laminates.

### Summary of the invention

The invention relates to a decorative or building laminate having a substrate and a resin-impregnated paper on the substrate, in which the resin-impregnated paper includes melamine cyanurate in an amount effective to provide or enhance opacity of the laminate.

To improve properties such as opacity in laminates the addition of melamine by means of vapour deposition is suggested in International patent publication WO 2006/130907. It has surprisingly been found that the inclusion of melamine cyanurate (MC) in or on a laminate structure or other decorative or building product provides significant improvement of opacity. In addition melamine cyanurate acting as a solid lubricant can improve laminate postformability.

Melamine cyanurate (MC) is an industrial chemical normally manufactured from melamine and cyanuric acid or isocyanuric acid, known in industry as a flame retardant additive for polyamide (e.g. nylon), polyurethane and epoxy resins. It is not strictly a salt but a crystalline complex of melamine and cyanuric acid.

The inclusion of MC into or on a decorative laminate or building product laminate may arise from addition of the MC during the papermaking process, for example at the wet-end of the paper machine, or during the non-woven manufacturing process, for example when a binder is applied to the glass fibres, or from application as a coating to the paper or non-woven after formation of the continuous web, whether in-line or as an off-line application. Various methods are available for applying a coating, for example by size press, roll coater, spraying, air knife, curtain coater or blade coaster. Furthermore MC may be applied by sublimation, or as a solid reaction between melamine and cyanuric acid. The method of applying the coating is not limited to the examples as any number of factors can influence the decision of which coating method to use.

More generally, the MC may be provided in a coating on the decorative or building product, or in a surface layer of the product. The product may be a substrate having a coating containing melamine cyanurate in a sufficient amount to provide or enhance opacity.

Alternatively or additionally, the inclusion of the MC may arise from addition of the MC in the process of impregnating a paper or non-woven for later use in creating a decorative laminate or building product laminate. Alternatively the MC may also be added directly to the surface of a substrate such as a wood panel or gypsumboard to provide opacity whether or not as part of a coating. If applied in the impregnation process the MC may be added to the impregnating resin, or the MC may be applied as a coating, or the MC may be applied using both impregnation and coating. The coating containing the MC may include a binder, for example PVA, or may be mixed into a resin, for example UF or MF resin. The coating may also be a different polymer to that of the impregnating resin, of which non-limiting examples are an acrylic, epoxy, urethane, melamine, urea, phenol, or polyester type.

The MC coating may also include other materials such as but not limited to TiO₂, ZnS, CaCO₃, kaolin, talcum, antistatic additives, antibacterial additives or abrasive resistant or scratch resistant additives. The MC coating may be combined with a binder, or may be mixed into a resin. The MC may be pre-mixed with one or more other materials to enhance dispersion, or to encapsulate the other materials. The MC may be mixed with pigments to provide colour as well as opacity.

In a first aspect, the invention provides a decorative or building product in which one or more constituents of the product include melamine cyanurate in an amount effective to provide or enhance opacity in the product.

In a second aspect, the invention provides a a method of manufacturing a decorative or building product including providing one of more constituents of the product with melamine cyanurate in an amount effective to provide or enhance opacity in the product.

The product is preferably a laminate, and typically includes an impregnated paper or non-woven component and optionally a substrate supporting the impregnated paper or non-woven component. The impregnating substance is typically but not necessarily a resin.

The one or more constituents that include melamine cyanurate then comprise one or more constituents of the laminate or substrate comprising a paper or non-woven component, a coating, an impregnating resin, and the substrate.

Preferably, the melamine cyanurate is present in conjunction with one or more other opacifying additives selected from TiO₂, ZnS, CaCO₃, talcum and Kaolin. A combination of MC and TiO₂ has proven especially effective.

The form in which the melamine cyanurate is present may be one or more of a coating, a coating that includes MC in admixture, an MC phase distributed through the respective constituent of the laminate, and a distributed constituent of a mixed phase comprising the constituent.

Advantageously, the laminate of the invention can exhibit improved postformability and/or fire resistance relative to the same laminate without MC.

In an embodiment the MC may be added to paper or non-woven materials suitable for use in the manufacture of decorative laminates and building product laminates, during the paper or non-woven manufacturing process.

In a further aspect, the invention extends to a paper or non-woven that includes melamine cyanurate in or on the paper or non-woven in a form effective to enhance the opacity of the paper or non-woven in a subsequent laminate in which the paper or non-woven is incorporated.

More generally, the decorative or building product may be a panel or moulding. The MC may be included in a substance that is coated directly onto the product. The substance may be a resin in particular embodiments.

For example, melamine and cyanuric acid components of MC may be added to a paper furnish (A). A downstream furnish (B) consisting of water, cellulose, melamine and cyanuric acid is stirred, allowing the melamine and cyanuric acid to solubilise and react to form MC, then a paper sheet is formed.

In an alternative combination of materials, the components of MC are added to a paper furnish (C), the components being melamine and cyanuric acid. The downstream furnish (D) consisting of water, cellulose, TiO₂, melamine and cyanuric acid is stirred, allowing the melamine and cyanuric acid to solubilise and react to form MC, then a paper sheet is formed.

In a further alternative the melamine and cyanuric acid are separately dissolved in water and the 2 solutions are mixed together and stirred for 30 minutes at room temperature (23°C), enabling the formation of MC. The solution containing MC is added to the paper furnish (D) and a paper sheet is formed.

In another embodiment, the MC may be added to paper or non-woven materials subsequent to their manufacture, e.g. during further processes in the add value manufacturing chain. For example, the MC may be added to the already formed paper web or non-woven web via a size press or any other coating method. The addition of MC as a coating to the already formed paper may be done in-line or may be done off-line.

In an alternative embodiment the MC is added to an impregnation resin and the resin containing MC is impregnated into the paper or non-woven. Alternatively the paper or non-woven is impregnated and the MC is applied to the first impregnated paper or non-woven as a coating. It is practical that the MC may be added via both the impregnation and coating stages.

In another embodiment, the MC may be added directly to a building product laminate substrate (e.g. a wood based panel or gypsum board) to improve the opacity of a coating on the surface of the substrate. For example, the MC may be combined with a binder and applied directly to the surface of a substrate. The binder may be, as a non-limiting example, PVA or UF resin or MF resin.. The substrate may then be further improved with a protective or decorative coating: The protective or decorative coating may be an impregnated paper or non-woven. The MC coated substrate may be printed before a protective coating is applied.

It is practical that the MC is applied to the paper, non-woven or substrate by a dry coating method such as electrostatic coating. The MC used in the present invention may be purchased ready to use. Alternatively the MC may be manufactured in situ.

A simple method for producing melamine cyanurate in situ in an embodiment where MC is added during the paper manufacturing process, entails adding melamine and cyanuric acid to the watery paper furnish and stirring until the melamine and cyanuric acid have dissolved and formed in situ MC. However due to the formation of MC before the melamine and cyanuric acid are fully dissolved this method may impact on the yield of MC. As a preferred alternative, the melamine and cyanuric acid are dissolved into separate watery solutions that are later combined and stirred to allow the formation of MC in situ.

A method for producing MC in situ in an embodiment where MC is added downstream to paper or non-woven materials, entails dissolving melamine and cyanuric acid in water and later combining and stirring the two solutions to allow for the formation of MC in situ. The MC does not need to be fully de-watered as it can be added to a watery impregnating resin, or a watery coating resin and applied to a paper or non-woven.

### Examples

The following examples report the opacity achieved using MC alone or in combination with another opacifying agent.

### Example 1

A paper disc was formed from the following furnish mixture, designated Mixture 1:-
3.4 litres water
75 g cellulose
37.5g melamine
37.5g cyanuric acid

The paper disc of 200mm diameter, which weighed 2.88g , was thereafter impregnated with melamine formaldehyde resin, and dried to b-stage. The paper was formed into a high pressure laminate in a hot press.

The opacity measured as % reflection over a black standard was 43.1%.

### Example 2

A paper disc was formed from the following furnish mixture, designated Mixture 2:-
3.4 litres water
75g cellulose
26.25g TiO₂
12.5g melamine
12.5g cyanuric acid

The reaction between the components took place at 23°C for 30 minutes. The paper disc, which weighed 2.73g and had an ash content of 11.4%, was thereafter impregnated with melamine formaldehyde resin, dried to b-stage and manufactured as a high pressure laminate as in Example 1. The MC and TiO₂ were present in equal proportions by weight.

The opacity was measured as 84.2%, indicating that a combination of MC and TiO₂ was more effective in enhancing opacity than MC alone (example 1).

### Comparative Example 3

A paper disc was formed from the following furnish mixture, designated Mixture 3:
3.4 litres water
75g cellulose
16.87g TiO₂

The paper disc which weighed 2.76g and had an the ash content of 14.4%, was thereafter impregnated with melamine formaldehyde resin, dried to b-stage and manufactured as a high pressure laminate as in Example 1.

The opacity was measured as 83.9%, indicating that a combination of MC and TiO₂ was similarly as effective in enhancing opacity as TiO₂ alone. This has the benefit that the less abrasive and commercially more attractive MC being less expensive and more readily available, can be used to substitute TiO₂.

### Example 4

A paper was formed from furnish Mixture 2 above. On this occasion, the melamine and cyanuric acid were first separately dissolved each in 5 litres of water then added to the furnish of water, cellulose and TiO₂ in a separate flask and mixed at 23°C for 30 minutes.. The paper disc thus formed was impregnated with melamine formaldehyde resin, dried to b-stage and manufactured as a high pressure laminate as in Example 1.

### The opacity was measured as 83.7%

### Example 5

A paper was formed from furnish Mixture 2 above. On this occasion, the mixture was stirred at 80°C for 30 minutes, before the paper was formed. This paper disc was impregnated with melamine formaldehyde resin, dried to b-stage and manufactured as a high pressure laminate as in Example 1.

The opacity was measured as 86.2%, marginally the best result. This is attributed to higher dissolution expressed as g/l of melamine and cyanuric acid at elevated temperature enabling increased formation of MC.

### Example 6

To form a mixture similar to paper mixture 2, the melamine and cyanuric acid were first mixed in a separate flask at 80°C (substantially higher than in Example 4) for 30 minutes, then filtered and washed with water, then added to the furnish of water, cellulose and TiO₂. The paper was impregnated with melamine formaldehyde resin, dried to b-stage and manufactured as a high pressure laminate as in Example 1.

The opacity was measured as 86%

### Example 7

A 75 g/m² white decor paper with TiO₂ content ca 36% was impregnated with clear melamine formaldehyde (**MF**) resin, then a paper from the same production was impregnated with a mix of MF resin and melamine cyanurate (**MC**). Similar end weights (ca. 168glm²) were achieved with 21.5g MC replacing a similar amount of MF resin.

In light type D65 10 Deg (simulating daylight) the MC-containing paper was found to be whiter, slightly less green and more yellow than the sample impregnated with MF only.

The sample with MC was found to have a better opacity: 94.18% vs 91.23%. By virtue of this observed outcome, it is envisaged that MC may be partly substituted for resin, say up to 10% or perhaps up to 20% or even up to 30%, to thus allow total TiO₂ in the system (in the resin and in the paper) to be reduced without any material reduction of opacity.

### Example 8

A 60g/m² white decor paper with TiO₂ content ca. 30% was impregnated with a MF resin containing 13% TiO₂ (MF resin 30 kg + TiO₂ 4.5 kg). The end weight of the impregnated paper was ca. 140g/m². The impregnated paper was pressed onto a piece of particleboard. The colour characteristics according to CIELab system were measured as L* 92.03, a* -0.92, b* 1.28.

A sample of 60g/m² paper from the same production was impregnated with a MF resin containing 9.13% TiO₂ and 5.15% MC (MF resin 30 kg + TiO₂ 3.15kg + MC 1.8kg). The end weight of the impregnated paper was ca. 140g/m². The impregnated paper was pressed onto a piece of particleboard. The colour characteristics according to CIELab system were measured as L* 92.07, a* -0.94, b* 1.26

The substitution of TiO₂ with MC did not change the colour characteristics of the white laminate to any noticeable degree.

The solubility of melamine and cyanuric acid are well known and should be taken into account when preparing water based mixtures used in papermaking. Accordingly the abovementioned mixtures and the amount and ratio of melamine and cyanuric acid are only described as non-limiting examples. Increasing the water temperature results in faster dissolution of melamine and cyanuric acid and as well the increased solubility of melamine and cyanuric acid provides a higher yield of MC per litre of water.

The addition of MC to provide opacity and or serve as a replacement or extender to TiO₂ is found to also bring to the fore improvements in other characteristics. One example is that because MC acts as a lubricant, the postformability of a laminate is improved both by the MC acting as a lubricant and because the MC has been used to substitute for TiO₂. Furthermore the presence of MC to enhance opacity is likely to improve the fire resistance of a decorative laminate, building product laminate, or a wood based panel or gypsumboard.

The use of MC as described in the present specification is of commercial value in the manufacture of decorative laminates or building product laminates based on paper or non-woven or applied directly to a building product substrate such as a wood based panels or gypsumboard, that finds application in the manufacture of furniture or construction products such as flooring, wall or ceiling articles.

The use of MC in paper not further utilised in a value-adding procedure is also forseen as part of the invention.

The amount of MC applied to paper, non-woven or building product laminate substrate will vary with regard to the opacity desired due to the colour intensity or colour variation of background material and commercial attractiveness of MC as a substitute in existing opacifying systems. It is therefore forseen that papers, non-wovens or building product laminates may achieve the desired opacity with 100% MC and no other opacifying agent, or that MC may be used in combination with existing opacifying agents at a substitution rate of between 1 - 99%.

As used herein, except where the context requires otherwise, the term "comprise" and variations of the term, such as "comprising", "comprises" and "comprised", are not intended to exclude further additives, components, integers or steps.

## Claims

1. A decorative or building laminate having a substrate and a resin-impregnated paper on the substrate, in which the resin-impregnated paper includes melamine cyanurate in an amount effective to provide or enhance opacity of the laminate.

2. A decorative or building laminate according to claim 1, wherein the melamine cyanurate is included in the matrix of the resin-impregnated paper.

3. A decorative or building laminate according to claim 1 or 2, wherein the resin impregnating the paper further includes TiO₂.

4. A decorative or building laminate according to claim 1 or 2, wherein the melamine cyanurate is present together with titanium dioxide effective to further enhance the opacity of the resin-impregnated paper relative to the presence of melamine cyanurate in the absence of titanium dioxide.

5. A decorative or building laminate according to claim 4, wherein the opacity of the resin-impregnated paper is similar to the opacity of the resin-impregnated paper arising from the presence of titanium dioxide in the absence of melamine cyanurate.

6. A decorative or building laminate according to any one of claims 1 to 5, wherein the decorative or building laminate is a panel or moulding.

7. A decorative or building laminate according to any one of claims 1 to 6, wherein the melamine cyanurate is included in the resin impregnating the paper.

8. A decorative or building laminate according to any one of claims 1 to 6, wherein the melamine cyanurate is included in a coating on the resin-impregnated paper.

9. A method of manufacturing a decorative or building laminate having a substrate and a resin-impregnated paper on the substrate, including providing the resin-impregnated paper with melamine cyanurate in an amount effective to provide or enhance opacity of the laminate.

10. A method according to claim 9, wherein the melamine cyanurate is provided in the matrix of the resin-impregnated paper.

11. A method according to claim 9 or 10, wherein the decorative or building product is a panel or moulding.

12. A method according to any one of claims 9 to 11 including providing the melamine cyanurate together with titanium dioxide effective to further enhance the opacity of the resin-impregnated paper relative to the presence of melamine cyanurate in the absence of titanium dioxide.

13. A method according to any one of claims 9 to 12, wherein the melamine cyanurate is included in the resin impregnating the paper.

14. A method according to any one of claims 9 to 12, wherein the melamine cyanurate is included in a coating on the resin-impregnated paper.

15. A method according to any one of claims 9 to 14, wherein the melamine cyanurate is generated in situ by separate addition of melamine and cyanuric acid.

## Patentansprüche

1. Zier- oder Bauschichtstoff mit einem Substrat und einem mit Harz imprägnierten Papier auf dem Substrat, wobei das mit Harz imprägnierte Papier Melamincyanurat in einer Menge umfasst, die wirksam ist, um die Opazität des Schichtstoffs bereitzustellen oder zu verbessern.

2. Zier- oder Bauschichtstoff nach Anspruch 1, wobei das Melamincyanurat in der Matrix des mit Harz imprägnierten Papiers enthalten ist.

3. Zier- oder Bauschichtstoff nach Anspruch 1 oder 2, wobei das mit Harz imprägnierte Papier ferner TiO₂ umfasst.

4. Zier- oder Bauschichtstoff nach Anspruch 1 oder 2, wobei das Melamincyanurat zusammen mit Titandioxid vorliegt, was wirksam ist, um die Opazität des mit Harz imprägnierten Papiers im Vergleich zum Vorliegen von Melamincyanurat bei Fehlen von Titandioxid weiter zu verbessern.

5. Zier- oder Bauschichtstoff nach Anspruch 4, wobei die Opazität des mit Harz imprägnierten Papiers ähnlich zu der Opazität des mit Harz imprägnierten Papiers ist, die sich aus dem Vorliegen von Titandioxid bei Fehlen von Melamincyanurat ergibt.

6. Zier- oder Bauschichtstoff nach einem der Ansprüche 1 bis 5, wobei der Zier- oder Bauschichtstoff eine Tafel oder ein Formteil ist.

7. Zier- oder Bauschichtstoff nach einem der Ansprüche 1 bis 6, wobei das Melamincyanurat in dem das Papier imprägnierenden Harz enthalten ist.

8. Zier- oder Bauschichtstoff nach einem der Ansprüche 1 bis 6, wobei das Melamincyanurat in einer Beschichtung auf dem mit Harz imprägnierten Papier enthalten ist.

9. Verfahren zur Herstellung eines Zier- oder Bauschichtstoffs mit einem Substrat und einem mit Harz imprägnierten Papier auf dem Substrat, umfassend das Versehen des mit Harz imprägnierten Papiers mit Melamincyanurat in einer Menge, die wirksam ist, um die Opazität des Schichtstoffs bereitzustellen oder zu verbessern.

10. Verfahren nach Anspruch 9, wobei das Melamincyanurat in der Matrix des mit Harz imprägnierten Papiers enthalten ist.

11. Verfahren nach Anspruch 9 oder 10, wobei das Zier- oder Bauprodukt eine Tafel oder ein Formteil ist.

12. Verfahren nach einem der Ansprüche 9 bis 11, umfassend das Bereitstellen des Melamincyanurats zusammen mit Titandioxid, was wirksam ist, um die Opazität des mit Harz imprägnierten Papiers im Vergleich zum Vorliegen von Melamincyanurat bei Fehlen von Titandioxid weiter zu verbessern.

13. Verfahren nach einem der Ansprüche 9 bis 12, wobei das Melamincyanurat in dem das Papier imprägnierenden Harz enthalten ist.

14. Verfahren nach einem der Ansprüche 9 bis 12, wobei das Melamincyanurat in einer Beschichtung auf dem mit Harz imprägnierten Papier enthalten ist.

15. Verfahren nach einem der Ansprüche 9 bis 14, wobei das Melamincyanurat in situ durch separate Zugabe von Melamin und Cyanursäure erzeugt wird.

## Revendications

1. Stratifié décoratif ou de construction ayant un substrat et un papier imprégné de résine sur le substrat, dans lequel le papier imprégné de résine comprend du cyanurate de mélamine en une quantité efficace pour fournir ou augmenter l'opacité du stratifié.

2. Stratifié décoratif ou de construction selon la revendication 1, dans lequel le cyanurate de mélamine est inclus dans la matrice du papier imprégné de résine.

3. Stratifié décoratif ou de construction selon la revendication 1 ou 2, dans lequel la résine imprégnant le papier comprend en outre du TiO₂.

4. Stratifié décoratif ou de construction selon la revendication 1 ou 2, dans lequel le cyanurate de mélamine est présent ensemble avec du dioxyde de titane efficace pour encore augmenter l'opacité du papier imprégné de résine relativement à la présence de cyanurate de mélamine en absence de dioxyde de titane.

5. Stratifié décoratif ou de construction selon la revendication 4, dans lequel l'opacité du papier imprégné de résine est similaire à l'opacité du papier imprégné de résine provenant de la présence de dioxyde de titane en absence de cyanurate de mélamine.

6. Stratifié décoratif ou de construction selon l'une quelconque des revendications 1 à 5, dans lequel le stratifié décoratif ou de construction est un panneau ou un moulage.

7. Stratifié décoratif ou de construction selon l'une quelconque des revendications 1 à 6, dans lequel le cyanurate de mélamine est inclus dans la résine imprégnant le papier.

8. Stratifié décoratif ou de construction selon l'une quelconque des revendications 1 à 6, dans lequel le cyanurate de mélamine est inclus dans un revêtement sur le papier imprégné de résine.

9. Procédé de fabrication d'un stratifié décoratif ou de construction ayant un substrat et un papier imprégné de résine sur le substrat, comprenant la fourniture du papier imprégné de résine avec du cyanurate de mélamine en une quantité efficace pour fournir ou augmenter l'opacité du stratifié.

10. Procédé selon la revendication 9, dans lequel le cyanurate de mélamine est fourni dans la matrice du papier imprégné de résine.

11. Procédé selon la revendication 9 ou 10, dans lequel le produit décoratif ou de construction est un panneau ou un moulage.

12. Procédé selon l'une quelconque des revendications 9 à 11, comprenant la fourniture du cyanurate de mélamine ensemble avec du dioxyde de titane efficace pour encore augmenter l'opacité du papier imprégné de résine relativement à la présence de cyanurate de mélamine en absence de dioxyde de titane.

13. Procédé selon l'une quelconque des revendications 9 à 12, dans lequel le cyanurate de mélamine est inclus dans la résine imprégnant le papier.

14. Procédé selon l'une quelconque des revendications 9 à 12, dans lequel le cyanurate de mélamine et inclus dans un revêtement sur le papier imprégné de résine.

15. Procédé selon l'une quelconque des revendications 9 à 14, dans lequel le cyanurate de mélamine est produit in situ par addition séparée de mélamine et d'acide cyanurique.
